(19) Europäisches Patentamt
European Patent Office
Office européen des brevets

(11) **EP 1 985 490 B1**

(12) **FASCICULE DE BREVET EUROPEEN**

(45) Date de publication et mention de la délivrance du brevet:
**05.06.2019 Bulletin 2019/23**

(51) Int Cl.:
***B60M 3/06*** *(2006.01)*     ***B60L 7/10*** *(2006.01)*

(21) Numéro de dépôt: **08103683.2**

(22) Date de dépôt: **23.04.2008**

(54) **Système, sous-station et procédé de récupération de l'énergie de freinage de véhicules ferroviaires, véhicules ferroviaires pour ce système.**

System, Schaltanlage und Verfahren zur Bremsenergierückgewinnung von Schienenfahrzeugen sowie Schienenfahrzeuge für dieses System.

System, substation and method for recovering brake energy from railway vehicles, railway vehicles for this system.

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **25.04.2007 FR 0703007**

(43) Date de publication de la demande:
**29.10.2008 Bulletin 2008/44**

(73) Titulaire: **ALSTOM Transport Technologies**
**93400 Saint-Ouen (FR)**

(72) Inventeurs:
• **Cornic, Daniel**
  **78112 Fourqueux (FR)**
• **Authie, Pierre**
  **78750 Mareil Marly (FR)**
• **Tayat, Faradj**
  **91190 Gif Sur Yvette (FR)**

(74) Mandataire: **Lavoix**
**2, place d'Estienne d'Orves**
**75441 Paris Cedex 09 (FR)**

(56) Documents cités:
EP-A- 1 350 666    DD-A3- 261 485
DE-A1- 3 527 309    FR-A- 2 873 332

**Description**

La présente invention concerne un système, une sous-station équipée de convertisseur statique et un procédé de récupération de l'énergie de freinage de véhicules ferroviaires, et des véhicules ferroviaires pour ce système.

Le déposant connaît, au travers du document FR 2 873 332 A, une sous-station apte à être mise en oeuvre dans un système d'alimentation et de récupération de l'énergie de freinage des véhicules ferroviaires comportant :

- au moins une ligne d'alimentation s'étendant le long d'une voie ferrée pour alimenter les véhicules ferroviaires circulant sur cette voie ferrée,
- plusieurs sous-stations $S_k$ de récupération de l'énergie de freinage espacées les unes des autres par une distance $D_k$ supérieure à 100 m, ladite sous-station $S_k$ étant électriquement raccordée à la ligne d'alimentation en un point $P_k$ de raccordement et équipée :

  • d'un convertisseur électrique apte à transférer de l'énergie électrique d'un réseau de distribution d'électricité vers la ligne d'alimentation et de la ligne d'alimentation vers le réseau de distribution d'électricité pour récupérer l'énergie de freinage des véhicules ferroviaires,
  • d'un capteur ou un estimateur d'une tension $U_{ssk}$ au niveau du point $P_k$ de raccordement,
  • d'un module de commande du convertisseur électrique apte à faire basculer automatiquement le convertisseur électrique dans un mode de régénération dans lequel le convertisseur électrique transfère continûment de l'énergie électrique de la ligne d'alimentation vers le réseau de distribution d'électricité pour récupérer l'énergie de freinage des véhicules ferroviaires.

Des considérations électriques connues de l'homme du métier permettent au déposant de dire que, pour une telle sous-station, il est avantageux de faire basculer le convertisseur dans un mode de régénération dès que la tension $U_{ssk}$ mesurée ou estimée est supérieure à un seuil $U_{C3k}$, de sorte que chaque sous-station est associée à sa propre zone $Z_{fk}$ de récupération d'énergie de freinage dans laquelle, quelle que soit la position du véhicule ferroviaire à l'intérieur de cette zone $Z_{fk}$, la sous-station $S_k$ est capable de récupérer au moins une partie de l'énergie de freinage de ce véhicule ferroviaire.

Une zone $Z_{fk}$ de récupération de l'énergie de freinage est définie comme étant un segment $[L_{Gfk} ; L_{Dfk}]$ de la ligne d'alimentation centrée autour du point $P_k$ et dont les limites $L_{Gfk}$, $L_{Dfk}$ sont espacées de part et d'autre du point $P_k$ par une distance $F_k$ égale à $(U_{Cmax}-U_{C3mink})/(\rho I_{max})$ où :

  • $U_{Cmax}$ est une tension maximale non permanente admissible sur la ligne d'alimentation,
  • $U_{C3mink}$ est la valeur minimale que peut prendre le seuil $U_{C3k}$ lors du fonctionnement de la sous-station,
  • $\rho$ est la résistance linéique de la ligne d'alimentation, et
  • $I_{max}$ est l'intensité maximale admissible pour le courant circulant sur la ligne d'alimentation.

Par ailleurs, le document DD 261485 décrit un système de commutation pour distribuer de l'énergie électrique sur des portions de caténaire, qui sont alimentées par des lignes d'alimentation connectées à travers des valves principales. Le système de commutation comporte en outre une ligne de transport d'énergie supplémentaire connectée à chaque portion de caténaire par des première et seconde valves. Le système est apte à récupérer l'énergie de freinage d'un véhicule relié à une première portion de caténaire et à la distribuer aux véhicules reliés à d'autres portions de caténaire par ouverture des première et/ou seconde valves.

Le document DE 3527309 décrit un système d'alimentation électrique pour les chemins de fer, dans lequel les lignes aériennes de contact sont alimentées à partir de sous-stations pouvant fonctionner dans un mode de récupération de la puissance de freinage.

Le document EP 1350666 décrit un système d'alimentation d'une ligne aérienne de contact pour véhicules électriques.

Dans la suite de cette description, les termes utilisés ont leur sens habituel dans le domaine du transport ferroviaire. En particulier, les termes tels que tension maximale non permanente, tension nominale ou tension minimale non permanente admissible sur la ligne d'alimentation sont, par exemple, définis dans la norme européenne EN 50 163/CEI 60850.

Dans la résistance linéique de la ligne d'alimentation on inclut la résistance linéique des conducteurs parallèles ou « feeders » en anglais, lorsque la ligne est une caténaire.

Par ligne d'alimentation, on désigne ici, aussi bien un fil aérien de caténaire sur lequel vient frotter le pantographe d'un véhicule ferroviaire pour s'alimenter en énergie électrique, qu'un troisième rail disposé le long des rails de voies de chemin de fer. Dans le cas d'un troisième rail, le pantographe est plus connu sous le terme de « frotteur ».

Pour freiner un véhicule ferroviaire, il est possible de commander un moteur de traction de ce véhicule ferroviaire pour qu'il fonctionne en générateur. L'énergie électrique générée par le moteur est ensuite transmise sur la ligne d'alimentation. Elle est appelée énergie de freinage.

Cette énergie de freinage est destinée à être consommée par d'autres véhicules ferroviaires à proximité ou par les sous-stations réversibles.

Lorsqu'une sous-station consomme de l'énergie de freinage, elle la transfère de la ligne d'alimentation vers le réseau de distribution d'électricité pour que celle-ci puisse être utilisée à d'autres fins.

Toutefois, fréquemment et spécifiquement aux heures creuses d'exploitation, l'énergie de freinage générée par le véhicule ferroviaire ne trouve aucun consommateur à proximité. Plus précisément, lorsqu'un véhicule ferroviaire génère de l'énergie de freinage sur la ligne d'alimentation, cette énergie est délivrée sous une tension $U_T$ au niveau du pantographe. Cette tension $U_T$ ne peut pas dépasser le seuil prédéfini $U_{Cmax}$. De l'autre côté, une sous-station $S_k$ ne peut consommer l'énergie de freinage que si celle-ci se présente sous une tension $U_{ssk}$ supérieure au seuil $U_{C3mink}$. On comprend donc qu'une sous-station $S_k$ ne peut, en théorie, consommer l'énergie de freinage du véhicule ferroviaire que si la distance qui le sépare de ce véhicule ferroviaire est inférieure à la distance $F_k$, c'est-à-dire inférieure à $(U_{Cmax}-U_{C3min})/(\rho I_{max})$.

Dans le cas inverse, c'est-à-dire si toutes les sous-stations se trouvent à plus de $F_k$ du véhicule ferroviaire qui freine, alors l'énergie de freinage n'est pas consommée. Dans ces conditions, la génération de l'énergie de freinage sur la ligne d'alimentation se traduit par une augmentation de la tension $U_T$ sur la ligne d'alimentation au niveau du pantographe. Pour empêcher que la tension $U_T$ ne dépasse le seuil $U_{Cmax}$, dans les véhicules ferroviaires existants, dès que la tension $U_T$ dépasse un seuil $U_{TG}$ inférieur au seuil $U_{Cmax}$, les véhicules ferroviaires arrêtent de générer de l'énergie de freinage sur la ligne d'alimentation et dissipe l'énergie de freinage dans un rhéostat embarqué sous forme de chaleur. Par mesure de sécurité, le seuil $U_{TG}$ est choisi bien plus petit que le seuil $U_{Cmax}$. Il en résulte que la distance maximale qui doit séparer le véhicule ferroviaire qui freine la sous-station est en réalité inférieure à $(U_{TG}-U_{C3mink})/(\rho I_{max})$. Dans les systèmes connus de redresseur non commandé avec onduleur en parallèle, par exemple, la différence de tension $U_{TG}-U_{C3mink}$ est de l'ordre de 7 % de la tension nominale d'alimentation. La distance qui sépare le véhicule ferroviaire qui freine du consommateur est donc très faible devant la distance $D_k$. Cette faible distance a pour conséquence qu'une partie substantielle de l'énergie de freinage des véhicules ferroviaires n'est pas récupérée. Cela se traduit donc par des pertes sèches d'énergie électrique.

L'invention vise à remédier à ce problème en proposant un système de récupération de l'énergie électrique de freinage qui limite le recours à l'usage du rhéostat et donc limite les pertes sèches d'énergie électrique.

Elle a donc pour objet une sous-station, un système et un procédé de récupération de l'énergie de freinage selon les revendications annexées.

Elle a également pour objet un véhicule ferroviaire destiné à circuler sur un réseau ferroviaire équipé du système précédent, dans lequel le véhicule ferroviaire est dépourvu de résistance embarquée à l'intérieur de ce véhicule et permettant de dissiper la totalité de l'énergie de freinage électrique de ce véhicule ferroviaire sous forme de chaleur.

Enfin, l'invention a également pour objet un support d'enregistrement d'informations comportant des instructions pour la mise en oeuvre du procédé précédent, lorsque ces instructions sont exécutées par un calculateur électronique.

Dans le système selon l'invention, puisque la distance $F_k$ est supérieure ou égale à $D_k/2$, quelle que soit la position du véhicule ferroviaire le long de la ligne d'alimentation, il se trouve au moins dans la zone $Z_{fk}$ d'une sous-station. Dans ces conditions, la récupération de l'énergie de freinage est possible quelle que soit la position des véhicules ferroviaires le long de la ligne d'alimentation, ce qui permet d'augmenter la quantité d'énergie de freinage récupérée. Il devient même possible d'assurer qu'au moins 99% de l'énergie de freinage est récupérée et donc de supprimer le rhéostat du véhicule ferroviaire destiné à dissiper l'énergie de freinage. Le système ci-dessus permet donc également de simplifier l'architecture des véhicules ferroviaires, et d'économiser sur le poids des véhicules, ce qui est un facteur d'économie d'énergie supplémentaire.

De plus, choisir la limite $U_{C3mink}$ de telle sorte que la distance $F_k$ soit supérieure ou égale à la distance $D_k$ permet de garantir que même en cas de panne d'une sous-station $S_k$, les sous-stations $S_{k-1}$ et $S_{k+1}$ pourront être utilisées pour récupérer l'énergie de freinage et ceci quelle que soit la position du véhicule ferroviaire qui freine entre ces deux sous-stations $S_{k-1}$ et $S_{k+1}$. Cela permet aussi d'utiliser simultanément deux sous-stations adjacentes pour récupérer l'énergie de freinage et donc de mutualiser la récupération d'énergie de freinage.

La sous-station selon l'invention présente les avantages suivants :

- choisir la distance $T_k$ supérieure ou égale à la moitié de la distance $D_k$ permet d'utiliser les mêmes critères d'emplacement des sous-stations pour alimenter les véhicules ferroviaires et récupérer l'énergie de freinage quelle que soit la position des véhicules ferroviaires le long de la ligne d'alimentation,

- choisir le seuil $U_{c3mink}$ inférieur au seuil $U_{dk}$ et donner la priorité au mode de régénération lorsque la tension $U_{ssk}$ est comprise entre ces deux seuils permet d'accroître la zone $Z_{fk}$ de la sous-station au-delà de la zone $Z_{tk}$,

- maintenir la valeur du seuil $U_{C3k}$ proche de la limite maximale $U_{C3maxk}$ permet de favoriser l'échange direct d'énergie entre les véhicules ferroviaires uniquement par l'intermédiaire de la ligne d'alimentation,

3

- décroître la valeur du seuil $U_{C3k}$ en cas de brusque augmentation de la tension $U_{ssk}$ permet d'adapter automatiquement les dimensions de la zone $Z_{fk}$ en fonction du trafic ferroviaire et de répartir l'énergie de freinage à récupérer entre les sous-stations les plus proches du véhicule ferroviaire,
- commander le convertisseur pour que celui-ci transfère la plus grande quantité possible d'énergie électrique de la ligne d'alimentation vers le réseau de distribution d'électricité dès que la tension $U_{ssk}$ dépasse un seuil $U_{Cmax2k}$ permet d'écrêter les surtensions sur la ligne d'alimentation sans perturber l'échange d'énergie entre les véhicules ferroviaires.

L'invention sera mieux comprise à la lecture de la description qui va suivre, donnée uniquement à titre d'exemple non limitatif et faite en se référant aux dessins sur lesquels :

- la figure 1 est une illustration schématique de l'architecture d'un réseau ferroviaire équipé d'un système de sous-stations réversibles pour la récupération de l'énergie de freinage,
- la figure 2 est un organigramme d'un procédé de récupération de l'énergie de freinage,
- les figures 3 à 6 sont des chronogrammes de signaux illustrant le fonctionnement du procédé de récupération de l'énergie de freinage, et
- la figure 7 est un graphe représentant les différentes zones de fonctionnement possibles du réseau ferroviaire de la figure 1.

Dans ces figures, les mêmes références sont utilisées pour désigner les mêmes éléments.

Dans la suite de cette description, les caractéristiques et fonctions bien connues de l'homme du métier ne sont pas décrites en détail.

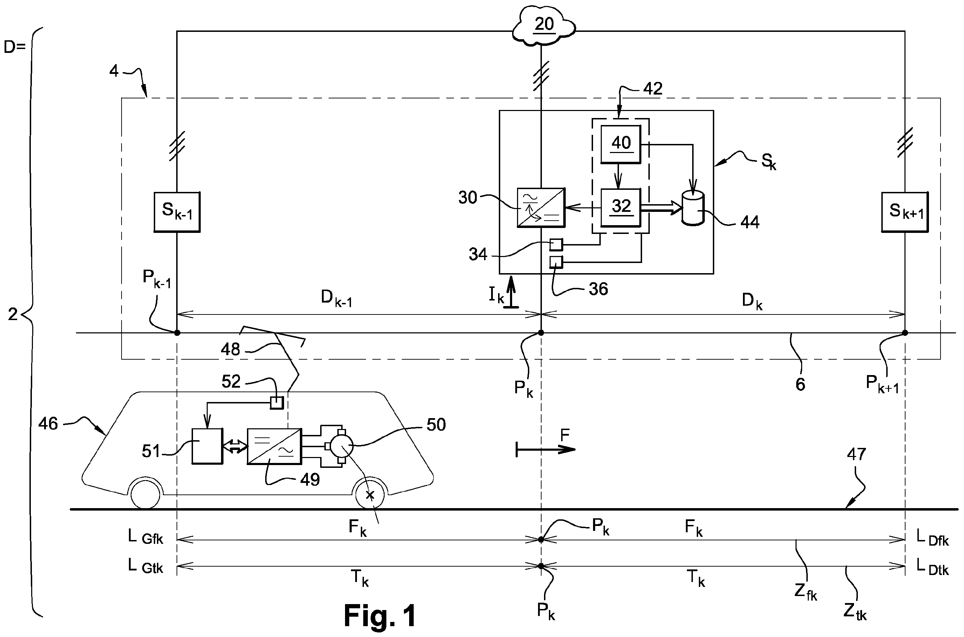

La figure 1 représente un réseau ferroviaire 2 équipé d'un système 4 de récupération de l'énergie de freinage.

Le système 4 comprend une ou plusieurs lignes d'alimentation et de nombreuses sous-stations réparties à intervalles réguliers le long de ces lignes d'alimentation. Pour simplifier la figure 1, seule une ligne d'alimentation 6 et trois sous-stations $S_{k-1}$, $S_k$ et $S_{k+1}$ ont été représentées.

L'indice k représente le numéro d'ordre de chaque sous-station en partant d'une sous-station So située à une extrémité de la ligne d'alimentation 6 et en se déplaçant dans la direction F indiquée sur la figure 1.

La tension sur la ligne d'alimentation 6 peut varier entre une tension maximale non permanente $U_{Cmax}$ et une tension minimale non permanente $U_{Cmin}$. Ces limites maximale et minimale sont typiquement définies par des normes telle que la norme européenne EN 50 163 ou CEI 60850. Par exemple, ici, la limite Ucmax est égale à 1000 Vdc et la limite $U_{Cmin}$ est égale à 500 Vdc pour une ligne d'alimentation dont la tension nominale $U_{Cnom}$ est égale à 750 Vdc.

Chaque sous-station $S_k$ est électriquement raccordée à la ligne d'alimentation 6 en un point $P_k$ de raccordement. Le point $P_k$ est séparé du point $P_{k+1}$ par une distance $D_k$ et du point $P_{k-1}$ par une distance $D_{k-1}$. La distance $D_k$ est également connue sous le terme de distance inter sous-stations. Cette distance $D_k$ est supérieure à plusieurs centaines de mètres. La distance $D_k$ est également suffisamment courte pour que la sous-station $S_k$ puisse alimenter en traction un véhicule ferroviaire dont le pantographe est situé au niveau du point $P_{k+1}$. Ici la distance $D_k$ est comprise entre 1000 et 2000m pour une tension nominale de 750Vdc et peut aller jusqu'à 20 km pour une tension nominale de 3000 Vdc..

Ici, par alimentation en traction, on désigne le fait qu'une sous-station génère sur la ligne d'alimentation 6 suffisamment de puissance pour alimenter les moteurs de traction du véhicule ferroviaire et donc pour permettre un déplacement de ce véhicule ferroviaire dans les conditions de tension fixées plus haut.

Chaque sous-station $S_k$ est associée à une zone $Z_{tk}$ d'alimentation en traction. La zone $Z_{tk}$ est un segment $[L_{Gtk} ; L_{Dtk}]$ de la ligne d'alimentation 6 centrée autour du point $P_k$. Les limites gauche et droite $L_{Gtk}$ et $L_{Dtk}$ sont espacées du point $P_k$ par une distance $T_k$. La distance $T_k$ est définie par la relation suivante :

$$T_k = \left(U_{ss\,max\,k} - U_{C\,min}\right)/\left(\rho I_{max}\right) \qquad (1)$$

où :

- $U_{ssmaxk}$ est la tension maximale en traction que peut générer la sous-station $S_k$ au niveau du point $P_k$ pour alimenter en traction un véhicule ferroviaire,
- $U_{Cmin}$ est la tension minimale non temporaire admissible sur la ligne d'alimentation,
- $\rho$ est la résistance linéique de la ligne d'alimentation 6 et de ses conducteurs parallèles ou « feeders » en anglais, et
- $I_{max}$ est l'intensité maximale admissible pour le courant circulant dans la ligne d'alimentation 6.

Par résistance linéique, on désigne ici la valeur de la résistance par unité de longueur.

La zone $Z_{tk}$ correspond donc au segment de la ligne d'alimentation 6 dans lequel, quelle que soit la position du véhicule ferroviaire à l'intérieur de cette zone, la sous-station $S_k$ est apte à alimenter en traction ce véhicule ferroviaire. Au-delà des limites $L_{Gtk}$ et $L_{Dtk}$, la chute de tension due à la résistance linéique de la ligne d'alimentation 6 est telle que même si la sous-station $S_k$ génère la tension $U_{ssmaxk}$ au niveau du point $P_k$, la tension au niveau du pantographe du véhicule ferroviaire peut être inférieure à la tension $U_{Cmin}$. Le véhicule ferroviaire ne peut donc pas être systématiquement alimenté en traction au-delà de ces limites $L_{Gtk}$ et $L_{Dtk}$ par la sous-station $S_k$.

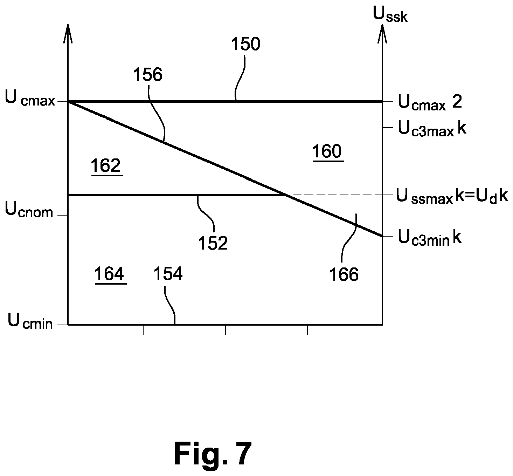

A titre d'illustration, $U_{ssmaxk}$ est supérieur ou égal à $U_{Cnom}$. Les valeurs des différents seuils ou limites sont illustrées sur la figure 7. Ces choix sont faits lors de la conception du réseau 2 et imposent donc la distance $T_k$. Ensuite, la distance $D_k$ est choisie égale ou légèrement inférieure à la distance $T_k$ de sorte que quelle que soit la position du véhicule ferroviaire le long de la ligne d'alimentation 6, celui-ci se trouve toujours simultanément dans deux zones $Z_{tk}$ et $Z_{tk+1}$. Un tel choix de la distance $D_k$ permet de garantir que le véhicule ferroviaire peut être alimenté quelle que soit sa position le long de la ligne d'alimentation 6 et ceci même en cas de panne de l'une des sous-stations $S_k$.

La sous-station $S_k$ est également associée à une zone $Z_{fk}$ de récupération de l'énergie de freinage. Cette zone $Z_{fk}$ est un segment $[L_{Gfk}$ ; $L_{Dfk}]$ de la ligne d'alimentation 6 centrée autour du point $P_k$. Les limites $L_{Gfk}$ et $L_{Dfk}$ sont espacées du point $P_k$ par une distance $F_k$. La distance $F_k$ est définie par la relation suivante :

$$F_k = \left( U_{C\,max} - U_{C3\,min\,k} \right) / \left( \rho I_{max} \right) \qquad (2)$$

où :

- $U_{Cmax}$ est la tension maximale non permanente admissible sur la ligne d'alimentation 6, et
- $U_{C3mink}$ est une limite basse pour la valeur d'un seuil $U_{C3k}$ qui sera défini plus loin.

Ici, $U_{C3mink}$ est choisi inférieur ou égal à $U_{Cnom}$. Ainsi, la distance $F_k$ est supérieure ou égale à la distance $D_k$.

Par exemple, la limite $U_{C3mink}$ est choisie égale à 700 Vdc.

La zone $Z_{fk}$ est une zone dans laquelle, quelle que soit la position du véhicule ferroviaire qui freine à l'intérieur de cette zone $Z_{fk}$, la sous-station $S_k$ peut récupérer de l'énergie de freinage de ce véhicule ferroviaire.

Etant donné que la distance $F_k$ est supérieure ou égale à la distance $D_k$, il est donc possible de récupérer l'énergie de freinage d'un véhicule ferroviaire qui freine soit au niveau du point $P_{k-1}$, soit au niveau du point $P_{k+1}$. Ainsi, même si la sous-station $S_k$ est hors service, les sous-stations $S_{k-1}$ et $S_{k+1}$ permettent de récupérer l'énergie de freinage du véhicule ferroviaire et ceci quelle que soit la position du véhicule ferroviaire entre les points $P_{k-1}$ et $P_{k+1}$. Il est donc possible de garantir que toute l'énergie de freinage du véhicule ferroviaire sera récupérée même si une sous-station est hors service.

Toutes les sous-stations $S_k$ sont raccordées à un même réseau grande distance 20 de distribution d'électricité. Ici le réseau 20 est un réseau de tension alternative triphasée haute tension de catégorie A ou B. Par haute tension alternative de catégorie A ou B, on désigne ici une tension alternative comprise entre 1 000 et 50 000 Vac. Conformément à l'enseignement de la demande de brevet FR 28 73 332, ce réseau 20 peut également être un réseau de basse tension alternative triphasée. Ici, par basse tension alternative triphasée, on désigne une tension inférieure à 1 000 Vac. Typiquement, ce réseau de basse tension alternative triphasée sera alors un réseau de basse tension de catégorie B ou BTB, c'est-à-dire dont la tension alternative est comprise entre 500 et 1 000 Vac.

Ici, toutes les sous-stations $S_k$ sont identiques les unes aux autres et seule la sous-station $S_k$ est représentée en détail sur la figure 1.

La sous-station $S_k$ comporte un convertisseur quatre quadrants 30 raccordé d'un côté au réseau 20 et de l'autre côté au point $P_k$ sur la ligne d'alimentation 6. Ce convertisseur 30 est apte à redresser la tension triphasée du réseau 20 pour délivrer sur la ligne d'alimentation 6 une tension continue redressée comprise entre $U_{ssmaxk}$ et $U_{Cmin}$. Le convertisseur 30 est également apte à onduler la tension continue présente sur la ligne d'alimentation 6 pour délivrer sur le réseau 20 une tension triphasée construite à partir de cette tension continue comprise entre $U_{C3mink}$ et $U_{Cmax}$. Le convertisseur 30 est apte à basculer d'un mode de fonctionnement en redresseur vers le mode de fonctionnement en onduleur et vice-versa en moins de 10 ms pour éviter les pertes de freinage au niveau du véhicule.

A cet effet, le convertisseur 30 est, par exemple, formé d'un pont redresseur raccordé en parallèle à un onduleur. Ici, le pont redresseur est un pont redresseur commandé réalisé à partir de thyristors ou de transistors de puissance tels que des transistors IGBT (Insulated Gâte Bipolar Transistor). Le pont redresseur commandé permet de générer une tension fixe de 750 Vdc sur la ligne d'alimentation 6 et ceci même en cas de variations de plus de 50% de la puissance consommée par la charge électrique alimentée par l'intermédiaire de la ligne d'alimentation 6.

L'onduleur permet d'absorber un courant continu $I_k$ au maximum égal à un seuil $I_{kmax}$. Ici, $I_{kmax}$ est supérieur ou égal à $I_{max}$. Ce courant $I_k$ est positif lorsqu'il traverse le convertisseur 30 en allant du point $P_k$ vers le réseau 20. Dans le cas contraire, l'intensité de ce courant $I_k$ est négative.

Le convertisseur 30 est un convertisseur commandable. A cet effet, la sous-station $S_k$ comporte une unité de commande 32 propre à commander le convertisseur 30 pour le faire fonctionner en tant que redresseur et, en alternance, en tant qu'onduleur. L'unité 32 permet également d'asservir la tension $U_{ssk}$ délivrée ou absorbée au niveau du point $P_k$ sur une consigne $U_{ssc}$. A cet effet, la sous-station $S_k$ comporte un capteur 34 de l'intensité du courant $I_k$ et un capteur 36 de la tension $U_{ssk}$ au niveau du point $P_k$.

Plus précisément, l'unité 32 est apte à faire basculer le convertisseur 30 dans un mode de régénération ou de récupération d'énergie électrique dès que la tension $U_{ssk}$ mesurée est supérieure à un seuil $U_{C3k}$. L'unité 32 est également apte à faire basculer automatiquement le convertisseur 30 dans un mode d'alimentation en traction dès que la tension $U_{ssk}$ est inférieure à un seuil $U_{dk}$. Par exemple, le seuil $U_{dk}$ est inférieur ou égal à $U_{Cnom}$.

La sous-station $S_k$ comporte également un module 40 de réglage de la valeur du seuil $U_{C3k}$ en fonction de la tension $U_{ssk}$ mesurée.

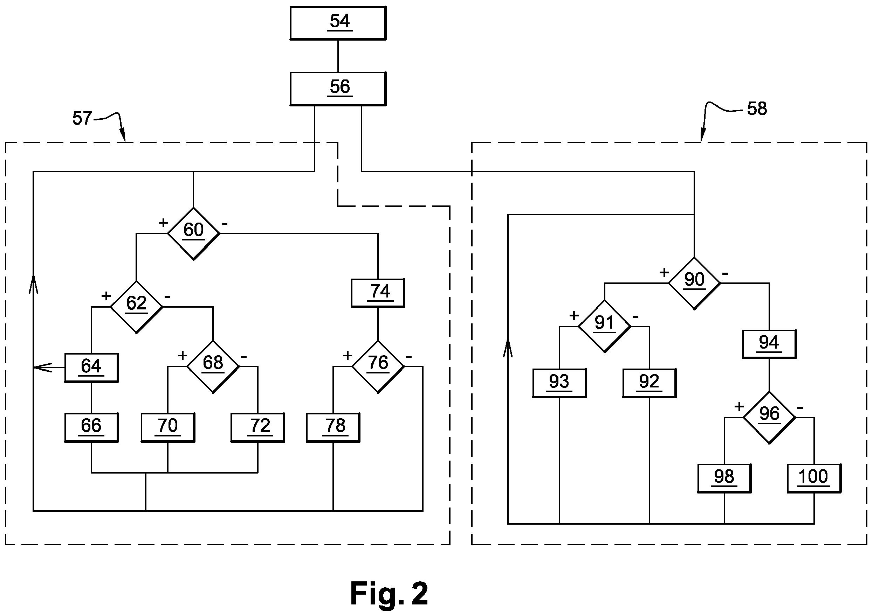

L'unité 32 et le module 40 sont, par exemple, réalisés à partir d'un calculateur programmable 42 apte à exécuter des instructions enregistrées dans une mémoire 44 raccordée à ce calculateur. A cet effet, la mémoire 44 comporte ici des instructions pour l'exécution du procédé de la figure 2 ainsi que les différentes valeurs des seuils et des limites utilisées ici.

Le système 2 comprend également un véhicule ferroviaire 46 circulant sur une voie ferrée 47. Ce véhicule 46 est électriquement connecté à la ligne d'alimentation 6 par l'intermédiaire d'un pantographe 48. Le pantographe 48 permet de capter de l'énergie électrique à partir de la ligne d'alimentation 6 et de la délivrer à l'entrée d'un convertisseur électrique 49 embarqué dans le véhicule 46. Le convertisseur 49 est apte à transformer la tension continue obtenue par l'intermédiaire du pantographe 48 en une tension triphasée d'alimentation d'un moteur 50 de traction. Le moteur 50 est, par exemple, un moteur électrique synchrone ou asynchrone. Ce moteur 50 est apte à entraîner en rotation des roues du véhicule 46. Le moteur 50 est également apte à fonctionner en tant que générateur pour freiner le véhicule 46. Dans ce cas, le convertisseur 49 est apte à fonctionner en tant que redresseur pour renvoyer l'énergie de freinage sur la ligne d'alimentation 6.

Le convertisseur 49 est un convertisseur commandable par une unité de pilotage 51. Cette unité de pilotage 51 est apte à protéger le convertisseur 49 en fonction d'une tension $U_T$ mesurée au niveau du pantographe 48 par l'intermédiaire d'un capteur 52. A cet effet, l'unité 51 est apte à déclencher l'isolation électrique du véhicule électrique 46 de la ligne d'alimentation 6 en fonction de la tension $U_T$ mesurée.

Le véhicule 46 est dépourvu de résistance de freinage ou de rhéostat embarqué apte à dissiper sous forme de chaleur la totalité de l'énergie de freinage produite par le moteur 50 lorsque celui-ci fonctionne en générateur.

Le fonctionnement du système 4 va maintenant être décrit plus en détail en regard du procédé de la figure 2.

Initialement, lors d'une étape 54, la valeur du seuil $U_{C3k}$ est prise égale à sa limite haute $U_{C3maxk}$. La limite haute $U_{C3maxk}$ est comprise entre 0,9 $U_{Cmax}$ et $U_{Cmax}$. Par exemple, ici, la limite $U_{C3maxk}$ est égale à 950 Vdc.

Ensuite, lors d'une étape 56, l'intensité du courant $I_k$ et la tension $U_{ssk}$ sont mesurées en permanence.

La sous-station $S_k$ procède ensuite simultanément à une phase 57 de réglage de la valeur du seuil $U_{C3k}$ et à une phase 58 de commande du convertisseur 30.

Au début de la phase 57, lors d'une étape 60, l'unité 40 vérifie si l'intensité du courant $I_k$ est nulle. Dans l'affirmative, le module 40 procède à une étape 62 de comparaison de la dérivée $\dfrac{dU_{ssk}}{dt}$ par rapport au temps de la tension $U_{ssk}$ mesurée à un seuil prédéterminé $a_{ssk}$. Par exemple, la valeur du seuil $a_{ssk}$ est supérieure ou égale à 10 V/s.

Si la valeur de la dérivée $\dfrac{dU_{ssk}}{dt}$ est supérieure au seuil $a_{ssk}$, alors lors d'une étape 64, le module 40 diminue progressivement la valeur du seuil $U_{C3k}$ tant que l'une des deux conditions suivante n'est pas remplie :

    1) la valeur de la tension $U_{C3k}$ a atteint la limite $U_{C3mink}$, ou
    2) l'intensité du courant $I_k$ est différente de zéro.

Si la condition 1) ci-dessus est remplie, lors d'une étape 66, la valeur du seuil $U_{C3k}$ est réinitialisée à la valeur $U_{C3maxk}$ et le procédé retourne à l'étape 60.

Dans le cas où la condition 2) ci-dessus est réalisée, l'étape 64 s'interrompt immédiatement et le procédé retourne à l'étape 60.

L'étape 64 est, par exemple, exécutée quand un véhicule ferroviaire se met à freiner dans la zone $Z_{fk}$ et qu'il n'existe aucun autre véhicule ferroviaire à proximité propre à consommer l'énergie de freinage de ce véhicule. Dans ce cas, la génération de l'énergie de freinage sur la ligne d'alimentation 6 se traduit par une brusque augmentation de la tension $U_{ssk}$, c'est-à-dire une augmentation dont la pente est supérieure au seuil $a_{ssk}$. Le fait de diminuer la valeur du seuil $U_{C3k}$ en réponse à cette brusque augmentation permet d'aller à la rencontre de la tension $U_{ssk}$ qui est en train d'augmenter et donc de réagir très rapidement.

L'étape 66 est exécutée lorsque l'énergie de freinage est générée par un véhicule ferroviaire qui se trouve en dehors de la zone $Z_{fk}$. Dans ce cas, de manière à favoriser l'échange d'énergie direct entre différents véhicules ferroviaires, la valeur du seuil $U_{C3k}$ est réinitialisée à la valeur $U_{C3maxk}$. Par échange d'énergie direct, on désigne un échange d'énergie électrique entre deux véhicules ferroviaires qui s'effectue uniquement par l'intermédiaire de la ligne d'alimentation.

Si la dérivée $\dfrac{dU_{ssk}}{dt}$ est strictement inférieure au seuil $a_{ssk}$, alors lors d'une étape 68, le module 40 vérifie que cette dérivée $\dfrac{dU_{ssk}}{dt}$ est strictement supérieure à zéro. Dans l'affirmative, lors d'une étape 70, la valeur du seuil $U_{C3k}$ est fixée égale à la valeur de la tension $U_{ssk}$ mesurée plus une constante positive $\varDelta U_{C3K}$. La constante $\varDelta U_{C3K}$ est petite, c'est-à-dire par exemple, inférieure à $(U_{Cmax}-U_{Cmin})/10$.

L'étape 70 permet de maintenir la valeur du seuil $U_{C3k}$ légèrement supérieure à la tension $U_{ssk}$ mesurée tant que la tension $U_{ssk}$ augmente doucement. Cette situation correspond typiquement au cas où l'énergie de freinage d'un véhicule ferroviaire présent dans la zone $Z_{fk}$ est consommée au moins en partie par un autre véhicule ferroviaire qui fonctionne en traction. Le fait de maintenir le seuil $U_{C3k}$ proche de la tension $U_{ssk}$ permet de réagir rapidement en cas de brusque augmentation de la tension $U_{ssk}$.

Dans le cas où la dérivée $\dfrac{dU_{ssk}}{dt}$ est inférieure ou égale à zéro, lors d'une étape 72, la valeur du seuil $U_{C3k}$ est réinitialisée à la valeur $U_{C3maxk}$.

L'étape 72 est exécutée dans le cas où l'énergie de freinage est entièrement consommée par d'autres véhicules ferroviaires. Dans ce cas, le fait de réinitialiser la valeur du seuil $U_{C3k}$ à la valeur $U_{Cmaxk}$ permet de favoriser l'échange d'énergie direct entre les différents véhicules ferroviaires.

Si lors de l'étape 60, l'intensité du courant $I_k$ mesurée est différente de zéro, alors, lors d'une étape 74, la valeur du seuil $U_{C3k}$ est prise égale à la valeur de la tension $U_{ssk}$ mesurée moins une constante positive prédéterminée. Ici, à titre d'exemple, la constante positive prédéterminée est prise égale à $\varDelta U_{C3K}$ comme lors de l'étape 70.

Ensuite, lors d'une étape 76, l'intensité $I_k$ est comparée à la valeur zéro. Si l'intensité $I_k$ est strictement inférieure à zéro, alors, lors d'une étape 78, la valeur du seuil $U_{C3k}$ est réinitialisée à la valeur $U_{C3maxk}$.

A l'issue de l'étape 78, le procédé retourne à l'étape 60.

Dans le cas contraire, c'est-à-dire si l'intensité du courant $I_k$ est strictement supérieure à zéro, le procédé retourne directement à l'étape 60.

Au début de la phase 58, lors d'une étape 90, la tension $U_{ssk}$ mesurée est comparée au seuil $U_{C3k}$. Si la tension $U_{ssk}$ est supérieure au seuil $U_{C3k}$, alors, lors d'une étape 91, l'unité 32 compare la tension $U_{ssk}$ à un seuil $U_{Cmax2}$. Le seuil $U_{Cmax2}$ est supérieur ou égal à la limite $U_{C3maxk}$ et inférieur ou égal à $U_{Cmax}$. Par exemple, ici, le seuil $U_{Cmax2}$ est choisi égal à $U_{Cmax}$.

Si la tension $U_{ssk}$ est inférieure au seuil $U_{Cmax2}$, alors, lors d'une étape 92, l'unité 32 fait basculer ou maintient le convertisseur dans le mode de régénération. Plus précisément, lors de l'étape 92, l'unité 32 commande le convertisseur 30 pour le faire fonctionner en tant qu'onduleur. De plus, lors de l'étape 92, l'unité 32 commande le convertisseur 30 pour que celui-ci maintienne constante la tension $U_{ssk}$ mesurée.

Ainsi, lors de l'étape 92, de l'énergie de freinage est transférée de la ligne d'alimentation 6 vers le réseau 20 tout en maintenant la tension $U_{ssk}$ constante. La tension $U_{ssk}$ est maintenue constante uniquement tant que le convertisseur 30 fonctionne dans le mode de régénération. Ainsi, lorsque le véhicule ferroviaire 46 cesse de générer de l'énergie de freinage, la tension $U_{ssk}$ chute.

Si lors de l'étape 91, la tension $U_{ssk}$ est supérieure au seuil $U_{Cmax2}$, alors, lors d'une étape 93, l'unité 32 commande le convertisseur 30 pour que celui-ci absorbe le maximum de puissance électrique possible. Ainsi, l'étape 93 permet d'écrêter une surtension qui apparaîtrait sur la ligne d'alimentation 6.

A l'issue de l'étape 92 ou 93, le procédé retourne à l'étape 90.

Si la tension $U_{ssk}$ mesurée est strictement inférieure au seuil $U_{C3k}$, alors lors d'une étape 94, l'unité 32 commande l'arrêt du transfert d'énergie de la ligne d'alimentation 6 vers le réseau 20 par l'intermédiaire du convertisseur 30.

Ensuite, la tension $U_{ssk}$ est comparée au seuil $U_{dk}$, lors d'une étape 96. Si la tension $U_{ssk}$ mesurée est strictement inférieure à ce seuil $U_{dk}$, alors le convertisseur bascule ou est maintenu dans le mode d'alimentation en traction. Plus précisément, lors d'une étape 98, l'unité 32 commande le convertisseur 30 pour le faire fonctionner en tant que redresseur. Par exemple, le seuil $U_{dk}$ est choisi égal à $U_{Cnom}$.

De plus, lors de l'étape 98, l'unité 32 commande le convertisseur 30 pour délivrer l'énergie captée à partir du réseau 20 sur la ligne d'alimentation 6 sous la forme d'une tension continue égale à la tension $U_{Cnom}$.

Dans le cas contraire, c'est-à-dire si la tension mesurée $U_{ssk}$ est supérieure au seuil $U_{dk}$, alors lors d'une étape 100, le fonctionnement du convertisseur 30 en tant que redresseur est arrêté. Ainsi, lors de l'étape 100, aucun échange d'énergie entre le réseau 20 et la ligne d'alimentation 6 ne s'établit par l'intermédiaire du convertisseur 30.

Dans ce procédé, le basculement du convertisseur vers le mode de régénération ou vers le mode d'alimentation en traction s'effectue en moins de 10 ms.

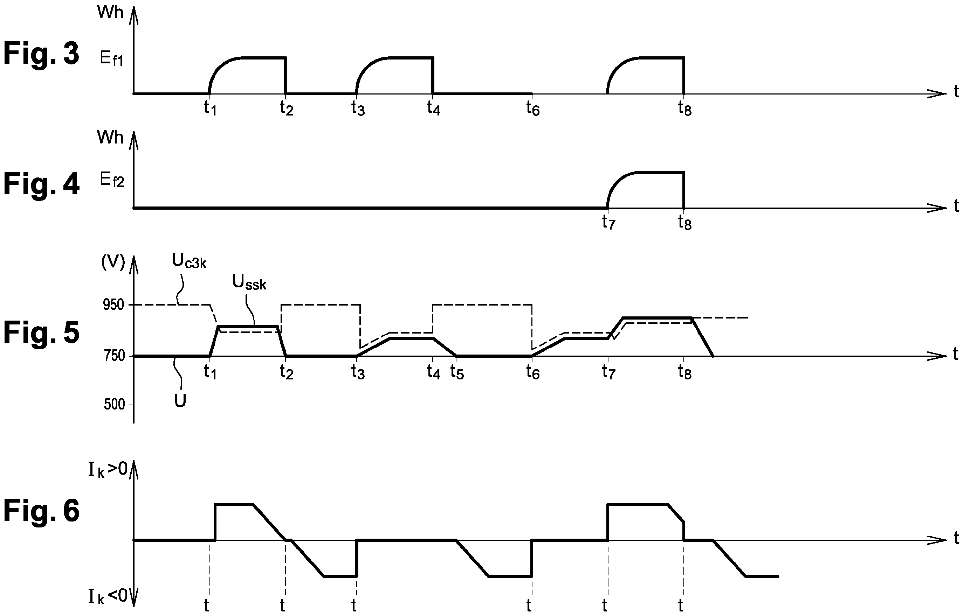

Les figures 3 à 6 représentent schématiquement l'évolution de différents signaux en fonction du temps lors du fonctionnement du système 2.

Plus précisément, la figure 3 représente l'énergie de freinage générée par le véhicule 46.

La figure 4 représente l'énergie de freinage générée par un second véhicule présent dans la même zone $Z_{fk}$ que le véhicule 46.

La figure 5 représente l'évolution au cours du temps de la valeur du seuil $U_{C3k}$ et de la tension $U_{ssk}$.

Enfin, la figure 6 représente l'intensité du courant $I_k$ traversant le convertisseur 30 de la sous-station $S_k$ en fonction du temps.

Initialement, comme illustré sur la figure 5, la valeur du seuil $U_{C3k}$ est égale à $U_{C3maxk}$.

A l'instant $t_1$, le véhicule 46 génère de l'énergie de freinage. Ceci se traduit par une brusque augmentation de la tension $U_{ssk}$. Cette brusque augmentation de la tension $U_{ssk}$ provoque une diminution de la valeur du seuil $U_{C3k}$. Lorsque la tension $U_{ssk}$ devient supérieure au seuil $U_{C3k}$, alors l'unité 32 commande le convertisseur 30 pour que celui-ci fonctionne en onduleur. L'énergie de freinage générée par le véhicule 46 est alors transférée de la ligne d'alimentation 6 vers le réseau 20 et le courant $I_k$ est positif.

A l'instant $t_2$, le véhicule 46 arrête de freiner. Cela se traduit immédiatement par une chute de la tension $U_{ssk}$. La tension $U_{ssk}$ devient donc inférieure au seuil $U_{C3k}$, ce qui se traduit par l'arrêt du fonctionnement du convertisseur 30 en tant qu'onduleur.

Lorsque la tension $U_{ssk}$ tombe en dessous du seuil $U_{dk}$, l'unité 32 commande le convertisseur 30 pour le faire fonctionner en tant que redresseur. Le courant qui traverse le convertisseur 30 est donc négatif. L'intensité négative du courant $I_k$ se traduit par une réinitialisation de la valeur du seuil $U_{C3k}$ à la valeur $U_{C3maxk}$.

Dès lors, jusqu'à l'instant $t_3$, la sous-station alimente en énergie électrique le véhicule 46.

A l'instant $t_3$, le véhicule 46 recommence à freiner et génère de l'énergie de freinage. Toutefois, on suppose maintenant qu'au même moment le second véhicule ferroviaire à proximité du véhicule 46 est alimenté en traction. Ainsi, au moins une partie de l'énergie de freinage du véhicule 46 est transmise directement par la ligne d'alimentation 6 à ce second véhicule qui la consomme pour se propulser. Cette énergie est donc transférée au second véhicule sans passer par l'intermédiaire d'une sous-station. Par conséquent, l'augmentation de la tension $U_{ssk}$ provoquée par l'énergie de freinage du véhicule 46 est faible. Dans ces conditions, la valeur du seuil $U_{C3k}$ est ajustée à une valeur légèrement supérieure à la valeur de la tension $U_{ssk}$ mesurée.

A l'instant $t_4$, le véhicule 46 cesse de freiner. La tension $U_{ssk}$ chute. La chute de la tension $U_{ssk}$ provoque la réinitiation de la valeur du seuil $U_{C3k}$ à la limite $U_{C3maxk}$.

Dans l'exemple décrit ici, on remarque qu'entre les instants $t_3$ et $t_4$, seul le véhicule 46 fournit de l'énergie au second véhicule fonctionnant en traction. La sous-station $S_k$ quant à elle ne fournit aucune énergie et ne consomme aucune énergie.

A l'instant $t_5$, la tension $U_{ssk}$ devient inférieure au seuil $U_{dk}$. L'unité 32 commande alors le fonctionnement du convertisseur 30 en tant que redresseur pour alimenter le véhicule ferroviaire 46. Le courant $I_k$ devient négatif.

A l'instant $t_6$, le véhicule 46 recommence à freiner. On suppose aussi qu'à cet instant, le second véhicule consomme de l'énergie sur la ligne d'alimentation 6 pour se propulser. Par conséquent, comme déjà illustré entre les instants $t_3$ et $t_4$, la tension $U_{ssk}$ croît lentement et la valeur du seuil $U_{C3k}$ est maintenue légèrement au-dessus de la valeur de la tension $U_{ssk}$ mesurée.

A l'instant $t_7$, on suppose que le second véhicule commence à freiner. Cela se traduit par une brusque augmentation de la tension $U_{ssk}$. La tension $U_{ssk}$ devient donc supérieure au seuil $U_{C3k}$ et le convertisseur 30 commence à fonctionner en tant qu'onduleur. Le courant $I_k$ devient positif. Le seuil $U_{C3k}$ est maintenu légèrement inférieur à la tension $U_{ssk}$.

On suppose cependant ici, qu'étant donné que deux véhicules ferroviaires freinent simultanément dans la zone $Z_{fk}$, l'intensité maximale $I_{ssmax}$ du courant $I_k$ qui peut traverser le convertisseur 30 est atteinte de sorte que ce convertisseur 30 ne peut pas absorber l'ensemble de l'énergie de freinage générée par les deux véhicules ferroviaires en même temps. La tension $U_{ssk}$ continue donc à croître brusquement. Cette brusque augmentation de la tension $U_{ssk}$ se traduit également par une brusque augmentation des tensions $U_{ssk-1}$ et $U_{ssk+1}$ au niveau des points $P_{k-1}$ et $P_{k+1}$. Ainsi, les seuils $U_{C3k-1}$ et $U_{C3+1}$ des sous-stations $S_{k-1}$ et $S_{k+1}$ diminue.

Avant que la tension $U_{ssk}$ au niveau du point $P_k$ atteigne la tension $U_{Cmax}$, la tension $U_{ssk-1}$ ou $U_{ssk+1}$ au niveau du point $P_{k-1}$ ou du point $P_{k+1}$ dépasse le seuil $U_{C3k-1}$ ou $U_{C3k+1}$ de la sous-station correspondante. Les sous-stations se mettent donc à transférer de l'énergie de freinage de la ligne d'alimentation 6 vers le réseau 20. Ceci est suffisant pour arrêter l'augmentation de la tension $U_{ssk}$ et donc pour la maintenir inférieure ou égale à la tension $U_{Cmax}$.

A l'instant $t_8$, le véhicule 46 et le second véhicule arrêtent simultanément de freiner. La tension $U_{ssk}$ chute brusquement et devient alors inférieure au seuil $U_{C3k}$. Le convertisseur 30 de la sous-station $S_k$ arrête alors immédiatement de transférer de l'énergie de freinage de la ligne d'alimentation 6 vers le réseau 20. L'intensité du courant $I_k$ redevient donc nulle. Ensuite, la chute de la tension $U_{ssk}$ conduit à réinitialiser la valeur du seuil $U_{C3k}$ à la valeur $U_{C3maxk}$.

Comme l'illustre l'exemple de fonctionnement décrit en regard des figures 3 et 6, le système 4 permet simultanément :

- de récupérer la totalité de l'énergie de freinage des véhicules ferroviaires,
- de favoriser l'échange d'énergie directe entre véhicules ferroviaires, et
- de mutualiser la puissance de freinage sur plusieurs sous-stations consécutives.

Les différents modes de fonctionnement possibles du système 4 sont illustrés sur le graphe de la figure 7. Sur ce graphe, l'axe vertical droit comporte les seuils $U_{Cmax}$ et $U_{Cmin}$ ainsi que la tension nominale $U_{Cnom}$. L'axe droit comporte les seuils mémorisés dans la sous-station, c'est-à-dire $U_{Cmax2}$, $U_{C3maxk}$, $U_{dk}$ et $U_{C3mink}$. Les lignes horizontales 150, 152 et 154 représentent respectivement les seuils $U_{Cmax}$, $U_{dk}$ et $U_{Cmin}$.

Sur ce graphe, l'évolution de la valeur du seuil $U_{C3k}$ est représentée par une ligne oblique 156. Ce graphe définit quatre zones de fonctionnements possibles 160, 162, 164 et 166.

La zone 160 se situe en dessous de la ligne 150 et au-dessus des lignes 156 et 152. Lorsque la tension $U_{ssk}$ est dans la zone 160, la sous-station fonctionne en régénérateur ou en récupérateur d'énergie de freinage.

La zone 162 est comprise entre les lignes 156 et 152. Lorsque la tension $U_{ssk}$ est comprise dans la zone 162, le convertisseur de la sous-station n'est ni dans le mode de régénération ni dans le mode d'alimentation en traction. Ainsi, la zone 162 correspond à une zone de fonctionnement dans laquelle l'énergie de freinage du véhicule ferroviaire est transmise directement à un autre véhicule ferroviaire par l'intermédiaire de la ligne d'alimentation 6.

La zone 164 est située en dessous des lignes 152 et 156 et au-dessus de la ligne 154. Lorsque la tension $U_{ssk}$ est comprise dans la zone 164, celle-ci est inférieure au seuil $U_{dk}$ de sorte que le convertisseur de la sous-station fonctionne dans le mode d'alimentation en traction.

Enfin, la zone 166 est située en dessous de la ligne 152 et au-dessus de la ligne 156. Lorsque la tension $U_{ssk}$ se situe dans la zone 166, celle-ci est à la fois inférieure au seuil $U_{dk}$ et supérieure à la limite $U_{C3mink}$. Dans cette zone, il est donc possible soit de faire fonctionner le convertisseur dans le mode d'alimentation en traction, soit dans le mode de régénération. Dans le procédé de la figure 3, il a été choisi de donner la priorité au mode de régénération de sorte que lorsque la tension $U_{ssk}$ est comprise dans la zone 166, le convertisseur de la sous-station est systématiquement basculé dans le mode de régénération. Toutefois, d'autres modes de fonctionnement sont possibles. Il pourrait être aussi décidé de donner la priorité au mode d'alimentation en traction, de sorte que lorsque la tension $U_{ssk}$ se situe dans la zone 166, le convertisseur de la sous-station $S_k$ est systématiquement basculé dans le mode d'alimentation en traction.

Enfin, de préférence, le mode de fonctionnement du convertisseur de la sous-station $S_k$ lorsque la tension $U_{ssk}$ est dans la zone 166 est choisi en fonction du mode de fonctionnement du convertisseur que celui-ci avait avant que la tension $U_{ssk}$ n'entre dans la zone 166. Par exemple, si la tension $U_{ssk}$ était dans la zone 160 avant d'entrer dans la zone 166, le convertisseur de la sous-station sera maintenu dans le mode de régénération même dans la zone 166. A l'inverse, si la tension $U_{ssk}$ était dans la zone 164 avant d'entrer dans la zone 166, alors le mode d'alimentation en traction sera maintenu même lorsque la tension $U_{ssk}$ rentre dans la zone 166.

De nombreux autres modes de réalisations sont possibles, par exemple, le convertisseur 30 peut être réalisé sous la forme d'un onduleur/redresseur commandable réalisé à partir de transistors de puissance. Dans ce mode de réalisation, les mêmes transistors de puissance sont utilisés pour redresser la tension ou pour onduler une tension.

En variante, ce qui a été décrit ci-dessus s'applique également à des caténaires alimentées en courant alternatif par l'intermédiaire d'un convertisseur statique alternatif/alternatif. Un tel convertisseur statique doit être commandé pour permettre un échange d'énergie du réseau 20 vers la ligne d'alimentation 6 et vice-versa. L'échange d'énergie n'est donc pas naturel.

Ici, le convertisseur 30 a été décrit comme étant un convertisseur quatre quadrants. En variante, le convertisseur 30 est un convertisseur à au moins deux quadrants permettant d'inverser le sens du courant $I_k$. Enfin, il n'est pas nécessaire d'inverser la polarité de la tension $U_{ssk}$.

Le seuil $U_{dk}$ et la limite $U_{C3mink}$ peuvent être, respectivement, strictement supérieurs à $U_{Cnom}$ et strictement inférieurs à $U_{Cnom}$.

En variante, les sous-stations $S_k$ peuvent échanger entre elles des données et les sous-stations $S_k$ sont chacune aptes à ajuster la valeur de leur seuil $U_{C3k}$ respectif en fonction des données reçues des autres sous-stations.

Le mode de fonctionnement décrit en regard des figures 3 à 6 n'est qu'un exemple simplifié donné à titre d'illustration. Bien entendu, le réglage du seuil $U_{C3k}$ peut être optimisé et ce qui a été décrit peut être adapté au cas où l'énergie de freinage de plus de deux véhicules doit être récupérée. De même, l'énergie électrique de freinage peut être récupérée à la fois de la voie montante et descendante.

**Revendications**

**1.** Sous-station $S_k$ de récupération de l'énergie de freinage de véhicules ferroviaires apte à être mise en oeuvre dans un système de récupération de l'énergie de freinage de véhicules ferroviaires comportant :

   - au moins une ligne d'alimentation (6) s'étendant le long d'une voie ferrée pour alimenter les véhicules ferroviaires circulant sur cette voie ferrée,
   - plusieurs sous-stations de récupération de l'énergie de freinage espacées les unes des autres par une distance $D_k$ supérieure à 100 m,
   ladite sous-station $S_k$ étant apte à être électriquement raccordée à la ligne d'alimentation (6) en un point $P_k$ et étant équipée :

   • d'un convertisseur électrique (30) apte à transférer de l'énergie électrique de la ligne d'alimentation (6) vers un réseau (20) de distribution d'électricité pour récupérer l'énergie de freinage des véhicules ferroviaires,
   • d'un capteur (36) ou un estimateur d'une tension $U_{ssk}$ au niveau du point $P_k$ de raccordement,
   • d'un module (32) de commande du convertisseur électrique apte à faire basculer automatiquement le convertisseur électrique dans un mode de régénération dans lequel le convertisseur électrique transfère continûment de l'énergie électrique de la ligne d'alimentation vers le réseau de distribution d'électricité pour récupérer l'énergie de freinage des véhicules ferroviaires,
   **caractérisée en ce que** le module (32) de commande du convertisseur électrique étant apte à faire basculer automatiquement le convertisseur électrique dans un mode de régénération dès que la tension $U_{ssk}$ mesurée ou estimée est supérieure à un seuil $U_{C3k}$, de sorte que la sous-station est associée à une zone $Z_{fk}$ de récupération d'énergie de freinage dans laquelle, quelle que soit la position du véhicule ferroviaire à l'intérieur de cette zone $Z_{fk}$, la sous-station $S_k$ est capable de récupérer au moins une partie de l'énergie de freinage de ce véhicule ferroviaire, la zone $Z_{fk}$ de récupération de l'énergie de freinage étant un segment $[L_{Gfk} ; L_{Dfk}]$ de la ligne d'alimentation (6) centrée autour du point $P_k$ et dont les limites $L_{Gfk}$, $L_{Dfk}$ sont espacées de part et d'autre du point $P_k$ par une distance $F_k$ égale à $(U_{Cmax}-U_{C3mink})/(\rho I_{max})$ où :

   • $U_{Cmax}$ est une tension maximale non permanente admissible sur la ligne d'alimentation,
   • $U_{C3mink}$ est la valeur minimale que peut prendre le seuil $U_{C3k}$ lors du fonctionnement de la sous-station,
   • p est la résistance linéique de la ligne d'alimentation,
   • $Im_{ax}$ est l'intensité maximale admissible pour le courant circulant sur la ligne d'alimentation,
   et **en ce que** la valeur de la limite $U_{C3mink}$ est telle que la distance $F_k$ est supérieure ou égale à $D_k/2$ ou à $D_k$.

**2.** Sous-station selon la revendication 1, dans laquelle le convertisseur électrique (30) est apte à transférer de l'énergie électrique du réseau (20) de distribution d'électricité vers la ligne d'alimentation (6) pour alimenter en traction le ou les véhicules ferroviaires, de sorte que la sous-station $S_k$ est également associée à une zone $Z_{tk}$ d'alimentation en traction des véhicules ferroviaires dans laquelle, quelle que soit la position du véhicule ferroviaire à l'intérieur de la zone $Z_{tk}$, la sous-station $S_k$ est capable d'alimenter des moteurs électriques de traction du véhicule ferroviaire, une zone $Z_{tk}$ d'alimentation en traction étant un segment $[L_{Gtk} ; L_{Dtk}]$ de la ligne d'alimentation centrée autour du point $P_k$ et dont les limites $L_{Gtk}$, $L_{Dtk}$ sont espacées de part et d'autre du point $P_k$ par une distance $T_k$ égale à $(U_{ssmaxk}-U_{Cmin})/(\rho I_{max})$, où :

   • $U_{ssmaxk}$ est la tension maximale que peut générer le convertisseur électrique de la sous-station $S_k$ au niveau du point $P_k$ pour alimenter en traction un véhicule ferroviaire,
   • $U_{Cmin}$ est la tension minimale non permanente admissible sur la ligne d'alimentation,
   la valeur de la limite $U_{ssmaxk}$ étant telle que la distance $T_k$ est supérieure ou égale à $D_k/2$ ou à $D_k$.

**3.** Sous-station selon la revendication 2, dans laquelle :

   - le module (32) de commande est apte à faire basculer automatiquement le convertisseur électrique (30) dans un mode d'alimentation en traction dans lequel le convertisseur électrique (30) transfère continûment de l'énergie électrique du réseau de distribution d'électricité vers la ligne d'alimentation dès que la tension $U_{ssk}$ mesurée

ou estimée est inférieure à un seuil $U_{dk}$,
- la limite $U_{C3mink}$ est strictement inférieure au seuil $U_{dk}$, et
- lorsque la tension $U_{ssk}$ mesurée ou estimée est comprise entre la limite $U_{C3mink}$ et le seuil $U_{dk}$, le module de commande est apte à faire basculer le convertisseur électrique soit dans le mode de régénération soit dans le mode d'alimentation en traction en fonction du mode dans lequel se trouvait le convertisseur avant que la tension $U_{ssk}$ ne soit comprise entre la limite $U_{C3mink}$ et le seuil $U_{dk}$.

4. Sous-station selon l'une quelconque des revendications 1 à 3, dans laquelle la sous-station $S_k$ comporte un module (40) de réglage de la valeur du seuil $U_{C3k}$ propre à faire varier la valeur de ce seuil de la limite basse $U_{C3mink}$ jusqu'à une limite haute $U_{C3maxk}$ supérieure ou égale à 90% d'une tension maximale $U_{Cmax}$, ce module (40) de réglage étant apte à maintenir la valeur du seuil $U_{C3k}$ strictement supérieure à la tension $U_{ssk}$ mesurée ou estimée tant que l'augmentation de la tension $U_{ssk}$ mesurée ou estimée reste inférieure à un seuil $a_{ssk}$ prédéterminé.

5. Sous-station selon la revendication 4, dans laquelle lorsque l'intensité du courant traversant le convertisseur électrique est nulle, le module (40) de réglage est apte à diminuer la valeur du seuil $U_{C3k}$ jusqu'à la limite $U_{C3mink}$ si l'augmentation de la tension $U_{ssk}$ est supérieure ou égale au seuil prédéterminé $a_{ssk}$.

6. Sous-station selon la revendication 4 ou la revendication 5, dans laquelle le module (32) de commande est apte à commander le convertisseur électrique pour que ce convertisseur électrique transfère la plus grande quantité possible d'énergie électrique par unité de temps de la ligne d'alimentation (6) vers le réseau (20) de distribution d'électricité, dès que la tension $U_{ssk}$ mesurée ou estimée dépasse un seuil $Ucmax2k$ supérieur ou égal à la limite $U_{C3maxk}$.

7. Sous-station selon l'une quelconque des revendications 1 à 6, dans laquelle le convertisseur électrique (30) est un convertisseur commandé à au moins deux quadrants réalisé à l'aide de thyristors ou de transistors de puissance, le module (32) de commande étant apte à commander le convertisseur pour maintenir constante la tension $U_{ssk}$ tant que la puissance électrique générée sur la ligne d'alimentation ou absorbée à partir de la ligne d'alimentation ne varie pas de plus de 50%.

8. Système de récupération de l'énergie de freinage de véhicules ferroviaires, ce système comportant :

   - au moins une ligne d'alimentation (6) s'étendant le long d'une voie ferrée pour alimenter les véhicules ferroviaires circulant sur cette voie ferrée,
   - plusieurs sous-stations $S_k$ de récupération de l'énergie de freinage espacées les unes des autres par une distance $D_k$ supérieure à 100 m, chaque sous-station $S_k$ étant électriquement raccordée à la ligne d'alimentation en un point $P_k$ de raccordement, **caractérisé en ce que** chaque sous-station est une sous-station conforme à l'une quelconque des revendications 1 à 7.

9. Système selon la revendication 8, dans lequel la valeur de la limite $U_{C3mink}$ est telle que la distance $F_k$ est supérieure ou égale à la distance $D_k$.

10. Véhicule ferroviaire (46) destiné à circuler sur un réseau ferroviaire équipé d'un système de récupération de l'énergie de freinage conforme à l'une quelconque des revendications 8 à 9, **caractérisé en ce que** le véhicule ferroviaire est dépourvu de rhéostat embarqué à l'intérieur de ce véhicule et permettant de dissiper la totalité de l'énergie électrique de freinage de ce véhicule ferroviaire sous forme de chaleur.

11. Procédé de récupération de l'énergie de freinage de véhicules ferroviaires, ce procédé comportant :

   - la fourniture d'au moins une ligne d'alimentation s'étendant le long d'une voie ferrée pour alimenter des véhicules ferroviaires circulant sur cette voie ferrée,
   - la fourniture de plusieurs sous-stations $S_k$ de récupération de l'énergie électrique de freinage espacées les unes des autres par une distance $D_k$ supérieure à 100 m, chaque sous-station $S_k$ étant électriquement raccordée à la ligne d'alimentation en un point $P_k$ de raccordement et équipée d'un convertisseur électrique apte à transférer de l'énergie électrique de la ligne d'alimentation vers un réseau de distribution d'électricité pour récupérer l'énergie de freinage des véhicules ferroviaires,
   - la mesure (56) ou l'estimation d'une tension $U_{ssk}$ au niveau du point $P_k$ de raccordement,
   - la commande (92) du convertisseur électrique pour le faire basculer automatiquement dans un mode de régénération dans lequel le convertisseur électrique transfère continûment de l'énergie électrique de la ligne d'alimentation vers le réseau de distribution d'électricité pour récupérer l'énergie de freinage des véhicules ferroviaires, dès que la tension $U_{ssk}$ mesurée ou estimée est supérieure à un seuil Uc3k, de sorte que chaque sous-station est associée à sa propre zone $Z_{fk}$ de récupération d'énergie de freinage dans laquelle, quelle que soit la position du véhicule ferroviaire à l'intérieur de cette zone $Z_{fk}$, la sous-station $S_k$ est capable de récupérer au moins une partie de l'énergie de freinage de ce véhicule ferroviaire,

une zone $Z_{fk}$ de récupération de l'énergie de freinage étant un segment [$L_{Gfk}$ ; $L_{Dfk}$] de la ligne d'alimentation (6) centrée autour du point $P_k$ et dont les limites $L_{Gfk}$, $L_{Dfk}$ sont espacées de part et d'autre du point $P_k$ par une distance $F_k$ égale à (Ucmax-$U_{C3mink}$)/($\rho I_{max}$) où :

- $U_{Cmax}$ est une tension maximale non permanente admissible sur la ligne d'alimentation,
- $U_{C3mink}$ est la valeur minimale que peut prendre le seuil $U_{C3k}$ lors du fonctionnement de la sous-station,
- p est la résistance linéique de la ligne d'alimentation, et
- $I_{max}$ est l'intensité maximale admissible pour le courant circulant sur la ligne d'alimentation,

la limite $U_{C3mink}$ étant telle que la distance $F_k$ est supérieure ou égale à $D_k/2$,

- le réglage (64) de la valeur du seuil $U_{C3k}$ à la valeur de la limite $U_{C3mink}$ lorsqu'un véhicule ferroviaire génère de l'énergie de freinage à la limite de la zone $Z_{fk}$.

12. Procédé selon la revendication 11, dans lequel le procédé comporte le maintien (70) de la valeur du seuil $U_{C3k}$ strictement supérieure à la tension $U_{ssk}$ mesurée ou estimée tant que l'augmentation de la tension $U_{ssk}$ reste inférieure à un seuil $a_{ssk}$ prédéterminé.

13. Procédé selon la revendication 11 ou 12, dans lequel le procédé comporte la diminution (64) de la valeur du seuil $U_{C3k}$ jusqu'à la limite $U_{C3mink}$ si l'augmentation de la tension $U_{ssk}$ mesurée ou estimée est supérieure ou égale au seuil prédéterminé $a_{ssk}$.

14. Support (44) d'enregistrement d'informations, **caractérisé en ce qu'**il comporte des instructions pour l'exécution d'un procédé conforme à l'une quelconque des revendications 11 à 13, lorsque ces instructions sont exécutées par un calculateur électronique (42).

## Patentansprüche

1. Unterstation $S_k$ zur Wiedergewinnung der Bremsenergie von Schienenfahrzeugen, dazu geeignet, in einem System zur Wiedergewinnung der Bremsenergie von Schienenfahrzeugen ausgeführt zu werden, aufweisend:

- mindestens eine Versorgungsleitung (6), die sich entlang einer Schiene erstreckt, zum Versorgen der Schienenfahrzeuge, die über diese Schiene fahren,
- mehrere Unterstationen zur Wiedergewinnung von Bremsenergie, die voneinander mit einer Distanz $D_k$ größer als 100m beabstandet sind,

wobei die Unterstation $S_k$ geeignet ist, elektrisch mit der Versorgungsleitung (6) in einem Punkt $P_k$ verbunden zu werden und ausgestattet ist mit:

- Einem elektrischen Wandler (30), geeignet zum Transferieren von elektrischer Energie von der Versorgungsleitung (6) in Richtung eines Netzwerks (20) zur Verteilung von Elektrizität zum Wiedergewinnen der Bremsenergie der Schienenfahrzeuge,
- einem Sensor (36) oder einem Spannungsschätzer $U_{ssk}$ auf Höhe des Verbindungspunkts $P_k$,
- einem Modul (32) zum Steuern des elektrischen Wandlers, geeignet zum automatischen Schalten des elektrischen Wandlers in einen Regenerationsmodus, in dem der elektrische Wandler stetig elektrische Energie der Versorgungsleitung zu dem Netzwerk zur Verteilung von Elektrizität zum Wiedergewinnen der Bremsenergie der Schienenfahrzeuge transferiert,

dadurch charakterisiert, dass das Modul (32) zum Steuern des elektrischen Wandlers geeignet ist, den elektrischen Wandler automatisch in einen Regenerationsmodus zu schalten, sobald die gemessene oder geschätzte Spannung $U_{ssk}$ größer ist als eine Schwelle $U_{C3k}$, auf die Art, dass die Unterstation mit einem Bereich $Z_{fk}$ zur Wiedergewinnung von Bremsenergie assoziiert ist, in dem, wie auch die Position des Schienenfahrzeugs im Inneren dieses Bereichs $Z_{fk}$ ist, die Unterstation $S_k$ in der Lage ist, mindestens einen Teil der Bremsenergie dieses Schienenfahrzeugs wiederzugewinnen, wobei der Bereich $Z_{fk}$ zur Wiedergewinnung der Bremsenergie ein Segment [$L_{Gfk}$; $L_{Dfk}$] der Versorgungsleitung (6) ist, das um den Punkt $P_k$ zentriert ist und dessen Grenzen $L_{Gfk}$, $L_{Dfk}$ auf beiden Seiten vom Punkt $P_k$ durch eine Distanz gleich

$(U_{Cmax}-U_{C3mink})/(\rho I_{max})$ beabstandet sind wo:

- $U_{Cmax}$ eine maximale nicht-permanente Spannung ist, die auf der Versorgungsleitung zulässig ist,
- $U_{C3mink}$ ein minimaler Wert ist, den die Schwelle $U_{C3k}$ bei Betrieb der Unterstation annehmen kann,
- p der längenbezogene Widerstand der Versorgungsleitung ist,
- $I_{max}$ die maximale zulässige Stärke für den Strom, der durch die Versorgungsleitung fließt, ist,

und dadurch, dass der Wert der Grenze $U_{C3mink}$ so ist, dass die Distanz $F_k$ größer oder gleich $D_k/2$ oder $D_k$ ist.

2. Unterstation gemäß Anspruch 1, in dem der elektrische Wandler (30) geeignet ist, elektrische Energie des Netzwerks (20) zur Verteilung von Elektrizität zu der Versorgungsleitung (6) zu transferieren, um das Schienenfahrzeug oder die Schienenfahrzeuge unter Zug zu versorgen auf die Art, dass die Unterstation $S_k$ auch mit einem Versorgungsbereich $Z_{tk}$ unter Zug der Schienenfahrzeuge assoziiert ist, in dem, wie auch die Position des Schienenfahrzeugs im Inneren des Bereichs $Z_{tk}$ ist, die Unterstation $S_k$ in der Lage ist, die elektrischen Zugmotoren des Schienenfahrzeugs zu versorgen,

wobei ein Versorgungsbereich $Z_{tk}$ unter Zug ein Segment $[L_{Gtk}; L_{Qtk}]$ der Versorgungsleitung ist, die um den Punkt $P_k$ zentriert ist und dessen Grenzen $L_{Gtk}$, $L_{Dtk}$ auf beiden Seiten vom Punkt $P_k$ durch eine Distanz $T_k$ gleich $(U_{ssmaxk}-U_{Cmin})/(\rho I_{max})$ beabstandet sind, wo:

- $U_{ssmaxk}$ die maximale Spannung ist, die der elektrische Wandler der Unterstation $S_k$ auf Höhe des Punkts $P_k$ zum Versorgen eines Schienenfahrzeugs unter Zug erzeugen kann,
- $U_{Cmin}$ die minimale nicht-permanente Spannung ist, die auf der Versorgungsleitung zulässig ist, wobei der Wert der Grenze $U_{ssmaxk}$ so ist, dass die Distanz $T_k$ größer oder gleich $D_k/2$ oder $D_k$ ist.

3. Unterstation gemäß Anspruch 2, in der:

- das Untermodul (32) zum Steuern geeignet ist, automatisch den elektrischen Wandler (30) in einen Modus zur Versorgung unter Zug zu schalten, in dem der elektrische Wandler (30) stetig elektrische Energie von dem Netzwerk zur Verteilung von Elektrizität zu der Versorgungsleitung transferiert, sobald die gemessene oder geschätzte Spannung $U_{ssk}$ unter einer Schwelle $U_{dk}$ ist,
- die Grenze $U_{C3mink}$ echt kleiner als die Schwelle $U_{dk}$ ist und
- wenn die gemessene oder geschätzte Spannung $U_{ssk}$ zwischen der Grenze $U_{C3mink}$ und der Schwelle $U_{dk}$ liegt ist das Modul zum Steuern geeignet, den elektrischen Wandler entweder in den Regenerationsmodus oder in den Modus zur Versorgung unter Zug abhängig von dem Modus, in dem sich der Wandler befand, bevor die Spannung $U_{ssk}$ nicht zwischen der Grenze $U_{C3mink}$ und der Schwelle $U_{dk}$ lag, zu schalten.

4. Unterstation gemäß einem der Ansprüche 1 bis 3, in dem die Unterstation $S_k$ ein Modul (40) zum Regeln des Werts der Schwelle $U_{C3k}$ enthält, das dazu geeignet ist, den Wert dieser Schwelle von der unteren Grenze $U_{C3mink}$ bis zu einer oberen Grenze $U_{C3maxk}$, größer oder gleich 90% einer maximalen Spannung $U_{Cmax}$ zu variieren, wobei dieses Modul (40) zum Regeln geeignet ist, den Wert der Schwelle $U_{C3k}$ strikt größer als die gemessene oder geschätzte Spannung $U_{ssk}$ zu halten, solange die Erhöhung der gemessenen oder geschätzten Spannung $U_{ssk}$ kleiner bleibt als eine vorgegebene Schwelle $a_{ssk}$.

5. Unterstation gemäß Anspruch 4, in dem, wenn die Intensität des Stroms, der den elektrischen Wandler durchfließt, null ist, das Modul (40) zum Regeln dazu geeignet ist, den Wert der Schwelle $U_{C3k}$ bis auf die Grenze $U_{C3mink}$ zu verringern, wenn die Erhöhung der Spannung $U_{ssk}$ größer oder gleich einer vorgegebenen Schwelle $a_{ssk}$ ist.

6. Unterstation gemäß Anspruch 4 oder Anspruch 5, in dem das Modul (32) zum Steuern geeignet ist, den elektrischen Wandler zu steuern, sodass dieser elektrische Wandler die größtmögliche Menge elektrische Energie pro Zeiteinheit der Versorgungsleitung (6) zu dem Netzwerk (20) zur Verteilung von Elektrizität transferiert sobald die gemessene oder geschätzte Spannung $U_{ssk}$ eine Schwelle $U_{Cmax2k}$ größer oder gleich der Grenze $U_{C3maxk}$ übersteigt.

7. Unterstation gemäß einem der Ansprüche 1 bis 6, in der der elektrische Wandler (30) ein in mindestens zwei Quadranten gesteuerter Wandler ist, realisiert mithilfe von Thyristoren oder Leistungstransistoren, wobei das Modul (32) zum Steuern geeignet ist, den Wandler zu steuern, sodass die Spannung $U_{ssk}$ aufrecht erhalten wird, solang die auf der Versorgungsleitung erzeugte oder ausgehend von der Versorgungsleitung absorbierte elektrische Energie um nicht mehr als 50% variiert.

EP 1 985 490 B1

8. System zur Wiedergewinnung von Bremsenergie von Schienenfahrzeugen, wobei dieses System aufweist:

- mindestens eine Versorgungsleitung (6), die sich entlang einer Schiene erstreckt, zum Versorgen der Schienenfahrzeuge, die über diese Schiene fahren,
- mehrere Unterstationen $S_k$ zur Wiedergewinnung von Bremsenergie, die voneinander mit einer Distanz $D_k$ größer als 100m beabstandet sind, wobei jede Unterstation $S_k$ elektrisch mit der Versorgungsleitung in einem Verbindungspunkt $P_k$ verbunden ist, dadurch charakterisiert, dass jede Unterstation eine Unterstation gemäß einem der Ansprüche 1 bis 7 ist.

9. System gemäß Anspruch 8, in dem der Wert der Grenze $U_{C3mink}$ derart ist, dass die Distanz $F_k$ größer oder gleich der Distanz $D_k$ ist.

10. Schienenfahrzeug (46), vorgesehen zum Fahren auf einem Schienennetzwerk, ausgestattet mit einem System zur Wiedergewinnung von Bremsenergie gemäß einem der Ansprüche 8 bis 9, dadurch charakterisiert, dass das Schienenfahrzeug frei von einem Regelwiderstand ist, der im Inneren dieses Fahrzeugs an Bord gebracht ist und es ermöglicht, die gesamte elektrische Bremsenergie des Schienenfahrzeugs in Form von Wärme abzuleiten.

11. Verfahren zur Wiedergewinnung von Bremsenergie von Schienenfahrzeugen, wobei das Verfahren aufweist:

- das Vorsehen mindestens einer Versorgungsleitung, die sich entlang einer Schiene erstreckt, zum Versorgen der Schienenfahrzeuge, die über diese Schiene fahren,
- das Vorsehen mehrerer Unterstationen zur Wiedergewinnung von elektrischer Bremsenergie, die voneinander mit einer Distanz $D_k$ größer als 100m beabstandet sind, wobei jede Unterstation $S_k$ elektrisch mit der Versorgungsleitung in einem Punkt $P_k$ verbunden ist und mit einem elektrischen Wandler ausgestattet ist, geeignet zum Transferieren von elektrischer Energie von der Versorgungsleitung in Richtung eines Netzwerks zur Verteilung von Elektrizität zum Wiedergewinnen der Bremsenergie der Schienenfahrzeuge
- das Messen (56) oder das Schätzen einer Spannung Ussk auf Höhe des Verbindungspunkts $P_k$,
- das Steuern des elektrischen Wandlers, geeignet zum automatischen Schalten des elektrischen Wandlers in einen Regenerationsmodus, in dem der elektrische Wandler stetig elektrische Energie der Versorgungsleitung zu dem Netzwerk zur Verteilung von Elektrizität zum Wiedergewinnen der Bremsenergie der Schienenfahrzeuge transferiert, sobald die gemessene oder geschätzte Spannung $U_{ssk}$ größer ist als eine Schwelle $U_{C3k}$, auf die Art, dass jede Unterstation mit ihrem eigenen Bereich $Z_{fk}$ zur Wiedergewinnung von Bremsenergie assoziiert ist, in dem, wie auch die Position des Schienenfahrzeugs im Inneren dieses Bereichs $Z_{fk}$ ist, die Unterstation $S_k$ in der Lage ist, mindestens einen Teil der Bremsenergie dieses Schienenfahrzeugs wiederzugewinnen, wobei ein Bereich $Z_{fk}$ zur Wiedergewinnung der Bremsenergie ein Segment [$L_{Gfk}$; $L_{Dfk}$] der Versorgungsleitung (6) ist, das um den Punkt $P_k$ zentriert ist und dessen Grenzen $L_{Gfk}$, $L_{Dfk}$ auf beiden Seiten vom Punkt $P_k$ durch eine Distanz gleich $(U_{Cmax}-U_{C3min})/(\rho I_{max})$ beabstandet sind wo:

• $U_{Cmax}$ eine maximale nicht-permanente Spannung ist, die auf der Versorgungsleitung zulässig ist,
• $U_{C3mink}$ ein minimaler Wert ist, den die Schwelle $U_{C3k}$ bei Betrieb der Unterstation annehmen kann,
• p der längenbezogene Widerstand der Versorgungsleitung ist,
• $I_{max}$ die maximale zulässige Stärke für den Strom, der durch die Versorgungsleitung fließt, ist,
wobei die Grenze $U_{C3mink}$ so ist, dass die Distanz $F_k$ größer oder gleich $D_k/2$ ist,

- das Regeln (64) des Werts der Schwelle $U_{C3k}$ auf den Wert der Grenze $U_{C3mink}$ wenn das Schienenfahrzeug Bremsenergie an der Grenze des Bereichs $Z_{fk}$ erzeugt.

12. Verfahren gemäß Anspruch 11, in dem das Verfahren das Halten (70) des Werts der Schwelle $U_{C3k}$ echt größer der gemessenen oder geschätzten Spannung $U_{ssk}$, solange die Erhöhung der Spannung Ussk kleiner bleibt als eine vorgegebene Schwelle $a_{ssk}$, aufweist.

13. Verfahren gemäß Anspruch 11 oder 12, in dem das Verfahren die Verringerung (64) des Werts der Schwelle $U_{C3k}$ bis auf die Grenze $UC3_{mink}$ aufweist, wenn die Erhöhung der gemessenen oder geschätzten Spannung $U_{ssk}$ größer oder gleich der vorgegebenen Schwelle $a_{ssk}$ ist.

14. Träger (44) zum Speichern von Informationen, dadurch charakterisiert, dass er Instruktionen zur Ausführung eines Verfahrens gemäß einem der Ansprüche 11 bis 13 aufweist, wenn diese Instruktionen durch einen elektronischen Rechner (42) ausgeführt werden.

14

**Claims**

1. Substation $S_k$ for recovering the brake energy of railway vehicles, capable of being employed in a system for recovering the brake energy of railway vehicles comprising:

- at least one supply line (6) extending along a railway track for supplying the railway vehicles travelling on that railway track,
- a plurality of substations for recovering the brake energy which are spaced apart from one another by a distance $D_k$ which is greater than 100 m,

said substation $S_k$ being capable of being electrically connected to the supply line (6) at a point $P_k$ and being equipped with:

• an electrical converter (30) capable of transferring electrical energy from the supply line (6) to an electricity distribution network (20) in order to recover the brake energy of the railway vehicles,
• a sensor (36) or an estimator of a voltage $U_{ssk}$ at the connection point $P_k$,
• a module (32) for controlling the electrical converter, capable of making the electrical converter switch automatically into a regeneration mode in which the electrical converter continuously transfers electrical energy from the supply line to the electricity distribution network in order to recover the brake energy of the railway vehicles,

**characterised in that**, the module (32) for controlling the electrical converter being capable of making the electrical converter switch automatically into a regeneration mode as soon as the voltage $U_{ssk}$ measured or estimated is greater than a threshold $U_{C3k}$, so that the substation is associated with a brake energy recovery zone $Z_{fk}$ in which, whatever the position of the railway vehicle within that zone $Z_{fk}$, the substation $S_k$ is capable of recovering at least a portion of the brake energy of that railway vehicle, the brake energy recovery zone $Z_{fk}$ being a segment $[L_{Gfk}; L_{Dfk}]$ of the supply line (6) which is centred about the point $P_k$ and the limits $L_{Gfk}$, $L_{Dfk}$ of which are spaced apart on either side of the point $P_k$ by a distance $F_k$ equal to $(U_{Cmax}-U_{C3mink})/(\rho I_{max})$, where:

• $U_{Cmax}$ is a maximum admissible non-permanent voltage on the supply line,
• $U_{C3mink}$ is the minimum value which can be assumed by the threshold $U_{C3k}$ during operation of the substation,
• p is the linear resistance of the supply line,
• $I_{max}$ is the maximum admissible intensity for the current flowing in the supply line, and **in that** the value of the limit $U_{C3mink}$ is such that the distance $F_k$ is greater than or equal to $D_k/2$ or $D_k$.

2. Substation according to claim 1, wherein the electrical converter (30) is capable of transferring electrical energy from the electricity distribution network (20) to the supply line (6) in order to supply the railway vehicle or vehicles with traction, so that the substation $S_k$ is likewise associated with a zone $Z_{tk}$ for supplying the railway vehicles with traction, wherein, whatever the position of the railway vehicle within the zone $Z_{tk}$, the substation $S_k$ is capable of supplying electric traction motors of the railway vehicle,
a traction supply zone $Z_{tk}$ being a segment $[L_{Gtk}; L_{Dtk}]$ of the supply line which is centred about the point $P_k$ and the limits $L_{Gtk}$, $L_{Dtk}$ of which are spaced apart on either side of the point $P_k$ by a distance $T_k$ equal to $(U_{ssmaxk}-U_{Cmin})/(\rho I_{max})$, where:

• $U_{ssmaxk}$ is the maximum voltage which can be generated by the electrical converter of the substation $S_k$ at the point $P_k$ to supply a railway vehicle with traction,
• $U_{Cmin}$ is the minimum admissible non-permanent voltage on the supply line,
the value of the limit $U_{ssmaxk}$ being such that the distance $T_k$ is greater than or equal to $D_k/2$ or $D_k$.

3. Substation according to claim 2, wherein:

- the control module (32) is capable of making the electrical converter (30) switch automatically into a traction supply mode in which the electrical converter (30) continually transfers electrical energy from the electricity distribution network to the supply line as soon as the voltage $U_{ssk}$ measured or estimated is below a threshold $U_{dk}$,
- the limit $U_{C3mink}$ is strictly less than the threshold $U_{dk}$, and
- when the voltage $U_{ssk}$ measured or estimated is between the limit $U_{C3mink}$ and the threshold $U_{dk}$, the control module is capable of making the electrical converter switch either into the regeneration mode or into the traction supply mode according to what mode the converter was in before the voltage $U_{ssk}$ was between the limit $U_{C3mink}$

and the threshold $U_{dk}$.

4. Substation according to any one of claims 1 to 3, wherein the substation $S_k$ comprises a module (40) for adjusting the value of the threshold $U_{C3k}$ which is capable of varying the value of that threshold from the lower limit $U_{C3mink}$ to an upper limit $U_{C3maxk}$ which is greater than or equal to 90% of a maximum voltage $U_{Cmax}$, the adjustment module (40) being capable of maintaining the value of the threshold $U_{C3k}$ strictly above the voltage $U_{ssk}$ measured or estimated as long as the increase in the voltage $U_{ssk}$ measured or estimated remains below a predetermined threshold $a_{ssk}$.

5. Substation according to claim 4, wherein, when the intensity of the current passing through the electrical converter is zero, the adjustment module (40) is capable of reducing the value of the threshold $U_{C3k}$ to the limit $U_{C3mink}$ if the increase in the voltage $U_{ssk}$ is greater than or equal to the predetermined threshold $a_{ssk}$.

6. Substation according to claim 4 or claim 5, wherein the control module (32) is capable of controlling the electrical converter so that the electrical converter transfers the greatest possible amount of electrical energy per unit time from the supply line (6) to the electricity distribution network (20) as soon as the voltage $U_{ssk}$ measured or estimated exceeds a threshold $U_{Cmax2k}$ which is greater than or equal to the limit $U_{C3maxk}$.

7. Substation according to any one of claims 1 to 6, wherein the electrical converter (30) is a controlled converter with at least two quadrants formed by means of thyristors or power transistors, the control module (32) being capable of controlling the converter in order to keep the voltage $U_{ssk}$ constant as long as the electric power generated on the supply line or absorbed from the supply line does not vary by more than 50%.

8. System for recovering the brake energy of railway vehicles, this system comprising:

   - at least one supply line (6) extending along a railway track for supplying the railway vehicles travelling on that railway track,
   - a plurality of substations $S_k$ for recovering the brake energy which are spaced apart from one another by a distance $D_k$ which is greater than 100 m, each substation $S_k$ being electrically connected to the supply line at a connection point $P_k$, **characterised in that** each substation is a substation according to any one of claims 1 to 7.

9. System according to claim 8, wherein the value of the limit $U_{C3mink}$ is such that the distance $F_k$ is greater than or equal to the distance $D_k$.

10. Railway vehicle (46) which is to travel on a railway network equipped with a system for recovering the brake energy according to any one of claims 8 to 9, **characterised in that** the railway vehicle does not have a rheostat installed inside the vehicle and allowing the totality of the electrical brake energy of the railway vehicle to be dissipated in the form of heat.

11. Method for recovering the brake energy of railway vehicles, this method comprising:

   - providing at least one supply line extending along a railway track for supplying railway vehicles travelling on that railway track,
   - providing a plurality of substations $S_k$ for recovering the electrical brake energy which are spaced apart from one another by a distance $D_k$ which is greater than 100 m, each substation $S_k$ being electrically connected to the supply line at a connection point $P_k$ and being equipped with an electrical converter capable of transferring electrical energy from the supply line to an electricity distribution network in order to recover the brake energy of the railway vehicles,
   - measuring (56) or estimating a voltage $U_{ssk}$ at the connection point $P_k$,
   - controlling (92) the electrical converter in order to make it switch automatically into a regeneration mode in which the electrical converter continuously transfers electrical energy from the supply line to the electricity distribution network in order to recover the brake energy of the railway vehicles as soon as the voltage $U_{ssk}$ measured or estimated is greater than a threshold $U_{C3k}$, so that each substation is associated with its own brake energy recovery zone $Z_{fk}$ in which, whatever the position of the railway vehicle within that zone $Z_{fk}$, the substation $S_k$ is capable of recovering at least a portion of the brake energy of that railway vehicle,
   a brake energy recovery zone $Z_{fk}$ being a segment $[L_{Gfk}; L_{Dfk}]$ of the supply line (6) which is centred about the point $P_k$ and the limits $L_{Gfk}$, $L_{Dfk}$ of which are spaced apart on either side of the point $P_k$ by a distance $F_k$ equal to $(U_{Cmax}-U_{C3mink})/(\rho I_{max})$, where:

- $U_{Cmax}$ is a maximum admissible non-permanent voltage on the supply line,
- $U_{C3mink}$ is the minimum value which can be assumed by the threshold $U_{C3k}$ during operation of the substation,
- p is the linear resistance of the supply line, and
- $I_{max}$ is the maximum admissible intensity for the current flowing in the supply line, the limit $U_{C3mink}$ being such that the distance $F_k$ is greater than or equal to $D_k/2$,

- adjusting (64) the value of the threshold $U_{C3k}$ to the value of the limit $U_{C3mink}$ when a railway vehicle generates brake energy at the limit of the zone $Z_{fk}$.

**12.** Method according to claim 11, wherein the method comprises maintaining (70) the value of the threshold $U_{C3k}$ strictly above the voltage $U_{ssk}$ measured or estimated as long as the increase in the voltage $U_{ssk}$ remains below a predetermined threshold $a_{ssk}$.

**13.** Method according to claim 11 or 12, wherein the method comprises reducing (64) the value of the threshold $U_{C3k}$ to the limit $U_{C3mink}$ if the increase in the voltage $U_{ssk}$ measured or estimated is greater than or equal to the predetermined threshold assk.

**14.** Information recording medium (44), **characterised in that** it comprises instructions for executing a method according to any one of claims 11 to 13 when those instructions are executed by an electronic computing device (42).

**Fig. 1**

Fig. 2

Fig. 3

Fig. 4

Fig. 5

Fig. 6

EP 1 985 490 B1

**Fig. 7**

## RÉFÉRENCES CITÉES DANS LA DESCRIPTION

**Documents brevets cités dans la description**

- FR 2873332 A
- DD 261485 D
- DE 3527309
- EP 1350666 A
- FR 2873332